(19) Europäisches Patentamt
European Patent Office
Office européen des brevets

(11) **EP 4 411 354 A1**

(12) **EUROPEAN PATENT APPLICATION**
published in accordance with Art. 153(4) EPC

(43) Date of publication:
**07.08.2024  Bulletin 2024/32**

(21) Application number: **22956800.1**

(22) Date of filing: **30.08.2022**

(51) International Patent Classification (IPC):
*G01N 23/06* (2018.01)    *G01N 23/223* (2006.01)
*G01N 9/02* (2006.01)

(52) Cooperative Patent Classification (CPC):
**G01N 9/02; G01N 23/06; G01N 23/223**

(86) International application number:
**PCT/CN2022/115851**

(87) International publication number:
**WO 2024/044968 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde City, Fujian 352100 (CN)**

(72) Inventors:
• **ZHAN, Bingyang
Ningde City, Fujian 352100 (CN)**
• **ZHANG, Jingdong
Ningde City, Fujian 352100 (CN)**

• **WANG, Qiangjun
Ningde City, Fujian 352100 (CN)**
• **ZHEN, Zhihui
Ningde City, Fujian 352100 (CN)**
• **CHEN, Weigang
Ningde City, Fujian 352100 (CN)**
• **WU, Qian
Ningde City, Fujian 352100 (CN)**
• **YAN, Liangjie
Ningde City, Fujian 352100 (CN)**

(74) Representative: **Rowlands, Stuart Michael et al
Maucher Jenkins
Seventh Floor Offices
Artillery House
11-19 Artillery Row
London SW1P 1RT (GB)**

(54) **MEASUREMENT METHOD AND APPARATUS FOR ELECTRODE SHEET**

(57)     Provided in the present application are a measurement method and apparatus for an electrode sheet. By means of the present application, the surface density of the entire area of an electrode sheet material can be effectively measured. The method comprises: acquiring a signal of a ray, which irradiates an electrode sheet and transmits through the electrode sheet, wherein the ray is provided in the width direction of the electrode sheet, covers the electrode sheet, and scans the electrode sheet in the lengthwise direction of the electrode sheet; and according to the signal, which is transmitted through the electrode sheet, measuring the surface density of a material with which the surface of the electrode sheet is coated.

300

Acquire a signal transmitted by an electrode plate under irradiation by a ray, where the ray is arranged in a traverse direction, namely, a width direction, of the electrode plate and covers the electrode plate, and scans the electrode plate in a longitudinal direction, namely, a length direction, of the electrode plate — 310

Detect a surface density of a material applied on a surface of the electrode plate based on the signal transmitted by the electrode plate — 320

FIG. 5

EP 4 411 354 A1

# Description

## TECHNICAL FIELD

This application relates to the field of battery technologies, and in particular, to an electrode plate testing method and apparatus.

## BACKGROUND

Energy conservation and emission reduction are key to sustainable development in automobile industry. As such, with the advantage of energy conservation and emission reduction, electric vehicles have become an important part for sustainable development in automobile industry. For electric vehicles, battery technology is an important factor related to their development.

Typically, a battery is formed by a plurality of battery cells, and each battery cell includes an electrode assembly. An electrode assembly is formed by a positive electrode plate and a negative electrode plate, and electric energy is generated by metal ions moving between the positive electrode plate and the negative electrode plate. The quality of electrode plates is related to the performance and safety of a battery. Therefore, it is necessary to test the electrode plates.

## SUMMARY

This application provides an electrode plate testing method and apparatus, so as to effectively detect the surface density of an electrode plate material in its entirety.

A first aspect provides an electrode plate testing method. The method includes: acquiring a signal transmitted by an electrode plate under irradiation by a ray, where the ray is arranged in a width direction of the electrode plate and covers the electrode plate, and scans the electrode plate along a length direction of the electrode plate; and detecting a surface density of a material applied on a surface of the electrode plate based on the signal transmitted by the electrode plate.

In this embodiment of this application, the surface density of the electrode plate is detected using a ray. The ray is arranged in the width direction of the electrode plate and covers the electrode plate, and scans the electrode plate along the length direction of the electrode plate. In this way, the surface density of the material applied on the surface of the electrode plate is detected based on the signal transmitted by the electrode plate. This ray covers the width direction of the electrode plate, and scans the surface of the electrode plate, so as to obtain the two-dimensional distribution of surface density in the width direction of the electrode plate. This greatly increases the detection accuracy and sampling rate compared with single-point detection.

In an embodiment, the detecting a surface density of a material applied on a surface of the electrode plate includes detecting surface densities corresponding to M width positions in the width direction of the electrode plate, where M is a positive integer greater than 1. The two-dimensional distribution of surface density in the width direction of the electrode plate can be effectively obtained by detecting the surface densities corresponding to M width positions in the width direction of the electrode plate.

In an embodiment, in the length direction, each of the M width positions corresponds to N length positions, where N is a positive integer greater than 1, and the detecting surface densities corresponding to M width positions in the width direction of the electrode plate includes: obtaining $M \times N$ pieces of detected data corresponding to the M width positions and the N length positions; and determining the surface densities corresponding to the M width positions based on the $M \times N$ pieces of detected data.

In this embodiment, a plurality of detector units are arranged in the width direction to detect the surface densities corresponding to a plurality of width positions in the width direction, and a plurality of detector units are also arranged in the length direction to detect the N positions in the length direction. In this way, $M \times N$ pieces of detected data are obtained, and the surface densities corresponding to the M width positions are determined based on the $M \times N$ pieces of detected data, thereby further improving the detection accuracy and ensuring the reliability of the detection results.

In an embodiment, the electrode plate moves along the length direction, and the obtaining $M \times N$ pieces of detected data corresponding to the M width positions and the N length positions includes: each time the electrode plate moves for one detection period, obtaining the $M \times N$ pieces of detected data corresponding to a part of the electrode plate irradiated by the ray in the detection period.

In this embodiment, the ray is fixedly positioned and the electrode plate moves along its length direction, so that the electrode plate and the ray move relative to each other, allowing the electrode plate to be scanned by the ray. Each time the electrode plate moves for one detection period, the $M \times N$ pieces of detected data corresponding to a region on the electrode plate irradiated by the ray in this detection period can be obtained. In this way, the two-dimensional distribution of surface density in the width direction in this region is obtained. This reduces errors caused by change of air and position during dynamic scanning of the ray in motion, further improving the detection accuracy.

In an embodiment, the determining the surface densities corresponding to the M width positions based on the $M \times N$ pieces of detected data includes: determining a surface density corresponding to the i-th width position based on N pieces of detected data corresponding to the i-th width position in the M width positions, where i ranges from 1 to M. Each width position corresponds to N pieces of detected data, and therefore abundant detected data can be provided, helping improve the detection result accuracy on the surface density corresponding to each width position.

In an embodiment, the determining a surface density corresponding to the i-th width position based on N pieces of detected data corresponding to the i-th width position in the M width positions includes: determining the surface density corresponding to the i-th width position based on an average value of the N pieces of detected data corresponding to the i-th width position. The surface density corresponding to each width position is obtained by averaging the N pieces of detected data corresponding to each width position, helping improve the detection result accuracy on the surface density corresponding to each width position.

In an embodiment, the method further includes calibrating the surface density corresponding to the i-th width position based on the surface density corresponding to the i-th width position and surface densities corresponding to the (i-1)th width position and/or the (i+1)th width position adjacent to the i-th width position.

The actual detection region of each detector unit is larger than the size of its signal receiving window. As a result, fluctuation of a surface density corresponding to an adjacent width position of each width position may affect the detection result of the width position. The surface density corresponding to this width position is calibrated based on the surface density corresponding to its adjacent width position. This improves the accuracy of the surface density corresponding to this width position.

In an embodiment, the calibrated surface density corresponding to the i-th width position is: $Y_i=f_1(y_{i-1})+f_2(y_i)+f_3(y_{i+1})$, where $Y_i$ is the calibrated surface density corresponding to the i-th width position, and $y_i$, $y_{i-1}$, and $y_{i+1}$ are uncalibrated surface densities corresponding to the i-th width position, (i-1)th width position, and (i+1)th width position, respectively. For example, $f_1(y_{i-1})=A1\times y_{i-1}$, $f_2(y_i)=B1\times y_i$, and $f_3(y_{i+1})=C1\times y_{i+1}$, where A1, B1, and C1 are correction coefficients. Weights are assigned to the i-th width position, (i-1)th width position, and (i+1)th width position based on their degrees of influence to better calibrate the surface density, thereby improving the accuracy of the surface density.

In an embodiment, the method further includes calibrating a surface density corresponding to the i-th width position detected in the j-th detection period, based on the surface density corresponding to the i-th width position detected in the j-th detection period and a surface density corresponding to the i-th width position detected in the (j-1)th detection period and/or the (j+1)th detection period.

There is an overlap between regions of the electrode plate irradiated by a ray in two adjacent detection periods. Therefore, the surface density detected in each detection period can be calibrated based on the surface density detected in its adjacent detection period, thereby improving the accuracy of the surface density corresponding to each width position in that detection period.

In an embodiment, the calibrated surface density corresponding to the i-th width position detected in the j-th detection period is: $Y'_j=f_4(y'_{j-1})+f_5(y'_j)+f_6(y'_{j+1})$, where $Y'_j$ is the calibrated surface density corresponding to the i-th width position detected in the j-th detection period, and $Y'_j$, $y'_{j-1}$, and $y'_{j+1}$ are uncalibrated surface densities corresponding to the i-th width position detected in the j-th detection period, (j-1)th detection period, and (j+1)th detection period, respectively. For example, $f_4(y'_{j-1})=A2\times y'_{j-1}$, $f_5(y'_j)=B2\times y'_j$, and $f_6(y'_{j+1})=C2\times y'_{j+1}$, where A2, B2, and C2 are correction coefficients. Weights are assigned to the current detection period, the previous detection period, and the next detection period based on their degrees of influence to better calibrate the surface density, thereby improving the accuracy of the surface density.

In an embodiment, the method further includes: determining whether the surface density corresponding to the i-th width position is abnormal based on surface densities corresponding to the i-th width position detected in a current detection period and an adjacent detection period thereof.

In this embodiment, based on the surface densities corresponding to each width position in two adjacent detection periods, whether the surface density corresponding to the width position is abnormal, for example, there are hidden creases, scratches, bulges, and other coating defects, can also be determined and a prompt is provided, so as to ensure the coating quality.

In an embodiment, the determining whether the surface density corresponding to the i-th width position is abnormal based on surface densities corresponding to the i-th width position detected in a current detection period and an adjacent detection period thereof includes: if a difference between the surface densities corresponding to the i-th width position detected in the current detection period and the adjacent detection period thereof is greater than or equal to a product of the surface density corresponding to the i-th width position in the adjacent detection period and a predetermined value, determining that the surface density corresponding to the i-th width position is abnormal, where the predetermined value is between 0 and 1.

Whether the surface density is abnormal can be determined easily and quickly based on a difference between the surface densities corresponding to each width position in two adjacent detection periods. For example, the predetermined value is between 1% and 10%.

In an embodiment, the method further includes: adjusting an amount of the material applied on the electrode plate in M coating directions, based on the surface densities corresponding to the M width positions, where the M coating directions correspond to the M width positions respectively, and the coating directions are parallel to the length direction.

In this embodiment, feeding amounts in the M coating directions corresponding to the M width positions are adjusted based on the surface densities corresponding to the M width positions for a closed-loop adjustment of the surface density of the electrode plate, greatly improving the coating effects of the electrode plate.

In an embodiment, intensity of the ray irradiating the electrode plate and strength of the signal transmitted by the electrode plate satisfy $I=I_0e^{-\lambda m}$, where $I_0$ indicates the intensity of the ray irradiating the electrode plate, I indicates the strength of the signal transmitted by the electrode plate, $\lambda$ indicates a mass absorption coefficient of the material, and m indicates a surface density of the electrode plate. For example, the ray is an X-ray or a $\beta$-ray. The logarithm of the strength of the signal transmitted by the electrode plate is inversely proportional to the surface density. It is easy and accurate to detect the surface density of the electrode plate by using a ray.

A second aspect provides an electrode plate testing apparatus including: a signal acquisition module, configured to acquire a signal transmitted by an electrode plate under irradiation by a ray, where the ray is arranged in a width direction of the electrode plate and covers the electrode plate, and scans the electrode plate along a length direction of the electrode plate; and a processing module, configured to detect a surface density of a material applied on a surface of the electrode plate based on the signal transmitted by the electrode plate.

In an embodiment, the processing module is specifically configured to detect surface densities corresponding to M width positions in the width direction of the electrode plate, where M is a positive integer greater than 1.

In an embodiment, in the length direction, each of the M width positions corresponds to N length positions, where the signal acquisition module is further configured to obtain $M\times N$ pieces of detected data corresponding to the M width positions and the N length positions; and the processing module is specifically configured to determine the surface densities corresponding to the M width positions based on the $M\times N$ pieces of detected data.

In an embodiment, the electrode plate moves along the length direction, and the signal acquisition module is specifically configured to: each time the electrode plate moves for one detection period, obtain the $M\times N$ pieces of detected data corresponding to a part of the electrode plate irradiated by the ray in the detection period.

In an embodiment, the processing module is specifically configured to determine a surface density corresponding to the i-th width position based on N pieces of detected data corresponding to the i-th width position in the M width positions, where i ranges from 1 to M.

In an embodiment, the processing module is specifically configured to determine the surface density corresponding to the i-th width position based on an average value of the N pieces of detected data corresponding to the i-th width position.

In an embodiment, the processing module is further configured to calibrate the surface density corresponding to the i-th width position based on the surface density corresponding to the i-th width position, and surface densities corresponding to the (i-1)th width position and/or the (i+1)th width position adjacent to the i-th width position.

In an embodiment, the calibrated surface density corresponding to the i-th width position is: $Y_i=f_1(y_{i-1})+f_2(y_i)+f_3(y_{i+1})$, where $Y_i$ is the calibrated surface density corresponding to the i-th width position, and $y_i$, $y_{i-1}$, and $y_{i+1}$ are uncalibrated surface densities corresponding to the i-th width position, (i-1)th width position, and (i+1)th width position, respectively.

In an embodiment, $f_1(y_{i-1})=A1\times y_{i-1}$, $f_2(y_i)=B1\times y_i$, and $f_3(y_{i+1})=C1\times y_{i+1}$, where A1, B1, and C1 are correction coefficients.

In an embodiment, the processing module is further configured to calibrate a surface density corresponding to the i-th width position detected in the j-th detection period, based on the surface density corresponding to the i-th width position detected in the j-th detection period and a surface density corresponding to the i-th width position detected in the (j-1)th detection period and/or the (j+1)th detection period.

In an embodiment, the calibrated surface density corresponding to the i-th width position detected in the j-th detection period is: $Y'_j=f_4(y'_{j-1})+f_5(y'_j)+f_6(y'_{j+1})$, where $Y'_j$ is the calibrated surface density corresponding to the i-th width position detected in the j-th detection period, and $Y'_j$, $y'_{j-1}$, and $y'_{j+1}$ are uncalibrated surface densities corresponding to the i-th width position detected in the j-th detection period, (j-1)th detection period, and (j+1)th detection period, respectively.

In an embodiment, $f_4(y_{j-1})=A2\times y'_{j-1}$, $f_5(y_j)=B2\times y'_j$, and $f_6(y'_{j+1})=C2\times y'_{j+1}$, where A2, B2, and C2 are correction coefficients.

In an embodiment, the processing module is further configured to determine whether the surface density corresponding to the i-th width position is abnormal based on a difference between the surface densities corresponding to the i-th width position detected in the current detection period and the previous detection period thereof.

In an embodiment, the processing module is specifically configured to: if a difference between the surface densities corresponding to the i-th width position detected in the current detection period and the previous detection period thereof is greater than or equal to a product of the surface density corresponding to the i-th width position in the adjacent detection period and a predetermined value, determine that the surface density corresponding to the i-th width position is abnormal, where the predetermined value is between 0 and 1.

In an embodiment, the predetermined value is between 1% and 10%.

In an embodiment, the method further includes: adjusting an amount of the material applied on the electrode plate in M coating directions, based on the surface densities corresponding to the M width positions, where the M coating directions correspond to the M width positions respectively, and the coating directions are parallel to the length direction.

In an embodiment, intensity of the ray irradiating the electrode plate and strength of the signal transmitted by the electrode plate satisfy $I=I_0 e^{-\lambda m}$, where $I_0$ indicates the intensity of the ray irradiating the electrode plate, I indicates the strength of the signal transmitted by the electrode plate, $\lambda$ indicates a mass absorption coefficient of the material, and m indicates a surface density of the electrode plate.

In an embodiment, the ray is an X-ray or a $\beta$-ray.

A third aspect provides an electrode plate testing apparatus including a memory and a processor, where the memory has computer instructions stored thereon, and the processor uses the computer instructions to instruct the apparatus to implement the electrode plate testing method according to the first aspect or any embodiment of the first aspect.

A fourth aspect provides a computer-readable storage medium, configured to store a computer program, where when the computer program is executed by a computing device, the electrode plate testing method according to the first aspect or any embodiment of the first aspect is implemented by the computing device.

## BRIEF DESCRIPTION OF DRAWINGS

To describe the technical solutions in the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.

FIG. 1 is a schematic diagram of detecting a surface density of an electrode plate in a conventional manner;
FIG. 2 is a stereogram of an electrode plate testing device according to an embodiment of this application;
FIG. 3 is a top view of an electrode plate testing device according to an embodiment of this application;
FIG. 4 is a cross-sectional view of a coating die head according to an embodiment of this application;
FIG. 5 is a schematic flowchart of an electrode plate testing method according to an embodiment of this application;
FIG. 6 is a schematic distribution diagram of detected data collected by detectors during a detection period;
FIG. 7 is a schematic distribution diagram of surface densities detected in a detection period; and
FIG. 8 is a schematic block diagram of an electrode plate testing apparatus according to an embodiment of this application.

In the accompanying drawings, the figures are not drawn to scale.

## DESCRIPTION OF EMBODIMENTS

The following further describes the embodiments of this application in detail with reference to the accompanying drawings and implementations. The following detailed description of embodiments and the accompanying drawings are intended to illustrate the principle of this application rather than to limit the scope of this application, meaning that this application is not limited to the embodiments as described.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be construed as limitations on this application. In addition, the terms "first", "second", and "third" are merely intended for a purpose of description, and shall not be understood as an indication or implication of relative importance. "Vertical" means being vertical with an allowable range of error other than being strictly vertical. "Parallel" means being parallel with an allowable range of error other than being strictly parallel.

The orientation terms appearing in the following description all refer to the orientations as shown in the drawings, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integrated connection, and may refer to a direct connection or an indirect connection via an intermediate medium. Persons of ordinary skill in the art can understand specific meanings of these terms in this application based on specific situations.

A battery in some embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent a liquid or another foreign matter from affecting charging or discharging of the battery cell.

The battery cell may include an electrode assembly and an electrolyte, where the electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. A current collector uncoated with the positive electrode active substance layer bulges out of a current collector coated with the positive electrode active substance layer, and the current collector uncoated with the positive electrode active substance layer is used as a positive tab. A lithium-ion battery is used as an example, for which the positive electrode current collector may be made of aluminum and a positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector uncoated with the negative electrode active substance layer bulges out of a current collector coated with the negative electrode active substance layer, and the current collector uncoated with the negative electrode active substance layer is used as a negative tab. The negative electrode current collector may be made of copper, and a negative electrode active substance may be graphite, carbon, silicon, or the like. To allow a large current to pass through without any fusing, a plurality of positive tabs are provided and stacked together, and a plurality of negative tabs are provided and stacked together. The separator may be made of polypropylene (PP), polyethylene (PE), or the like. In addition, the electrode assembly may be a wound structure or a laminated structure, but the embodiments of this application are not limited thereto.

At present, during production of electrode plates for batteries, for example, lithium batteries, the weight of a material applied on a surface of the electrode plates can be detected following the principle of ray pass-through and absorption, so as to obtain a detection result of the surface density of an electrode plate and evaluate the coating consistency. Specifically, after passing through the material under test applied on the surface of the electrode plate, the ray attenuates in intensity, and the surface density of the material under test can be calculated by measuring the intensity of the ray beam passing through the material.

It should be understood that the electrode plate mentioned in the embodiments of this application includes sheet-like materials for the lithium battery industry such as a positive electrode plate, a negative electrode plate, a positive electrode current collector, a negative electrode current collector, and a separator material, and the electrode plate testing method in an embodiment of this application can be used to test any one of the foregoing types of electrode plates.

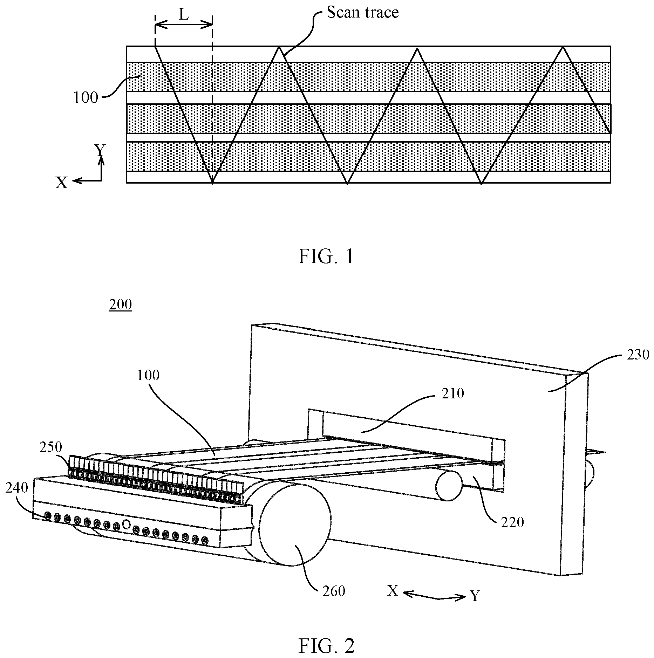

For example, for the surface densitometer shown in FIG. 1, a emitter and a detector move in a breadth direction, namely, a width direction X, of an electrode plate 100, which is also referred to as transverse movement; and the electrode plate 100 moves along its length direction Y, which is also referred to as longitudinal movement. The emitter moves back and forth in the direction X to scan a surface of the electrode plate 100. As can be seen from FIG. 1, due to superposition of transverse and longitudinal velocities, the scanning traces of all detection points leaving on the surface of the electrode plate 100 are Z-shaped.

A distance for one round trip of scanning the electrode plate 100 is $S=2 \times L \times V1/V2$, where L is the width of the electrode plate 100, V1 is the moving speed of the electrode plate 100, for example, 5-150 m/min, and V2 is the scanning speed of the surface densitometer, for example, 1-24m/min. As the coating speed of the electrode plate 100 increases, the distance S for one round trip of the surface densitometer scanning the electrode plate 100 becomes greater, and the detection coverage becomes smaller. In this case, the weight fluctuation of the material applied on the surface of the electrode plate 100 cannot be detected and reported in a timely manner.

At present, a gas ionization chamber is generally used as the detector for detecting a ray passing through the electrode plate 100. It takes a certain integral time for the ionization chamber to collect rays. The transverse resolution of the surface density is equal to a sum of the transverse size of a radiation spot and a moving distance of the ionization chamber within the integral time. A higher surface density scanning speed may cause the transverse resolution to deteriorate, and a lower transverse resolution hinders detecting the surface density fluctuation of the electrode plate 100 within a small range in the transverse direction.

In addition, movement of the electrode plate 100 produces vibration, and movement of the surface densitometer also produces vibration. To prevent the surface densitometer from scratching the electrode plate 100, the distance between the emitter and the detector is large, for example, 15-40 mm. A change of air weight, temperature and humidity, dust, and other factors may cause errors to a measurement system.

An encoder can be used to record the electrode plate 100 and the scanning speed, and the surface density at a corresponding position of the electrode plate 100 can be calculated through time fitting and then reported to a coating die head. Due to an error in measurement speed of the encoder, a position error is present in the calculated surface density of the electrode plate 100, and an error is also present in the surface density of the corresponding position reported to the adjusting apparatus of the coating die head. This affects the decision on adjusting the coating weight.

All these factors affect the improvement of surface density detection effects and consistency of the electrode plate. In view of this, this application provides a high-resolution, high-precision, and real-time integrated surface density measurement system. It uses two-dimensional imaging instead of small spot detection and scanning, so as to detect the surface density of an electrode plate in a real-time and integrated manner. The transverse resolution can be accurate to 1-20 mm, for example, 5 mm and 10 mm. Moreover, the emitter and detector in this application are static and do not need to be moved. This achieves static surface scanning, thereby eliminating the position calculation error and measurement error caused by air change during dynamic scanning. A one-to-one mapping is present among the surface densities, physical positions on the electrode plate corresponding to the surface densities, and adjusting apparatuses of the coating die head. In this way, position errors are eliminated and timeliness of closed-loop reporting is improved, thereby improving the consistency of electrode plate coating.

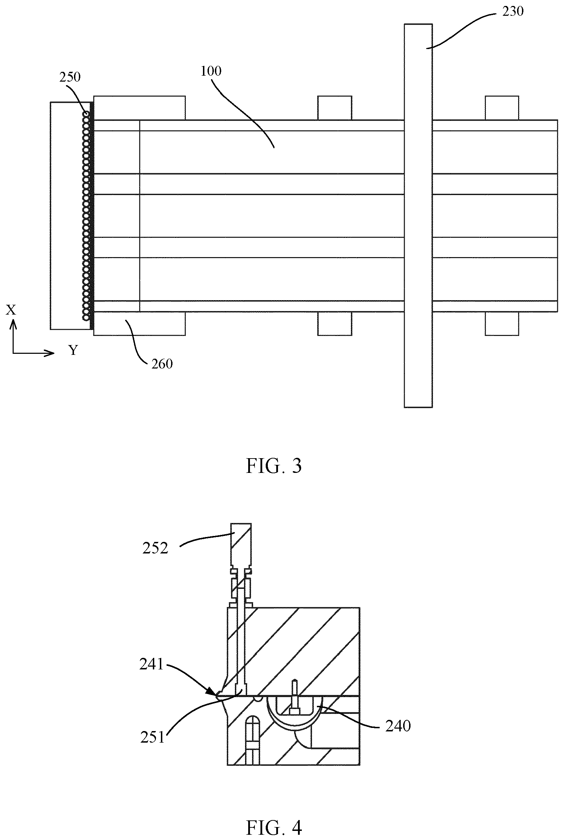

FIG. 2 and FIG. 3 show an electrode plate testing device 200 according to an embodiment of this application. FIG. 2 is a schematic stereogram of the device 200, and FIG. 3 is a top view of the device 200. As shown in FIG. 2 and FIG. 3, the device 200 includes an emitter 210 and a detector 220. The emitter 210 emits a ray to the electrode plate 100, where the ray is arranged in a width direction X of the electrode plate 100 and covers the electrode plate 100, and scans the electrode plate 100 along a length direction Y of the electrode plate 100. The detector 220 and the emitter 210 are arranged on two opposite sides along a thickness direction of the electrode plate 100. The detector 220 is configured to detect a signal transmitted by the electrode plate 100 under irradiation by a ray emitted by the emitter 210. After this signal is processed, the surface density of the material applied on a surface of the electrode plate 100 can be obtained. The device 200 further includes a bracket 230 for fixing the emitter 210 and the detector 220. A shape of the bracket 230 is not limited, and may be, for example, a rectangle.

The detector 220 is an array formed by a plurality of detector units, and may include, for example, M rows × N columns of detector units, where the M rows of detector units are arranged in the width direction X, the N columns of detector units are arranged in the length direction Y, and M and N are positive integers.

The device 200 further includes a coating die head 240, and the coating die head 240 is configured to apply a material, for example, a slurry, on the surface of the electrode plate 100.

In this embodiment of this application, the device 200 can detect the surface density of the electrode plate 100 in real time during coating of the electrode plate 100. For example, as shown in FIG. 2 and FIG. 3, when the electrode plate 100 is moving on a roller surface of a coating roller 260, the slurry provided by the coating die head 240 is applied on the surface of the electrode plate 100, and then when the electrode plate 100 moves between the emitter 210 and the detector 220, the emitter 210 covers the width direction X of the electrode plate 100 to obtain two-dimensional detected data of the electrode plate 100 in the width direction X. The slurry provided by the coating die head 240 can be adjusted based on the detected data to improve the consistency in the surface density of the electrode plate 100 in the width direction X. FIG. 4 is a cross-sectional view of a coating die head and its adjusting mechanism. As shown in FIG. 4, the coating die head 240 is connected to its adjusting mechanism 250. The adjusting mechanism 250 includes an adjusting block 251 and a driver block 252. The adjusting block 251 may be in the shape of a rectangle, a rhombus, a trapezoid, or the like. The driver block 252 controls the height of the adjusting block 251, so that the size of a slit 241 of the coating die head 240 with a corresponding coating size is changed by moving the adjusting block 251 up and down. A smaller slit 241 results in a lower slurry flow, a lower coating weight of the electrode plate 100, and a lower surface density at the corresponding position. A larger slit 241 results in a higher slurry flow, a higher coating weight of the electrode plate 100, and a higher surface density at the corresponding position. In this way, the surface density in partial region of the electrode plate 100 can be adjusted.

The device 200 can also be connected to a peripheral matching circuit and a control system of an industrial computer. In the detection process, the emitter 210 and the detector 220 do not move, and only the electrode plate 100 moves along its length direction Y This eliminates the position calculation error and measurement error caused by air change during dynamic scanning.

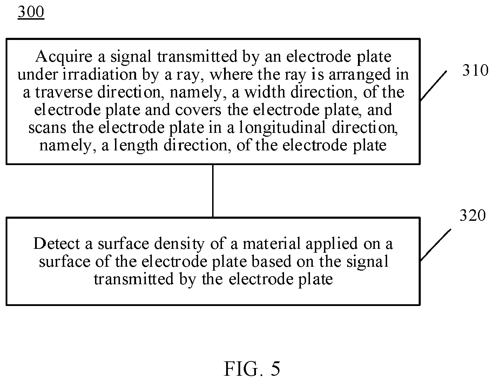

With reference to FIG. 5 to FIG. 7, the following describes in detail an electrode plate testing method 300 according to an embodiment of this application. As shown in FIG. 5, the method 300 includes some or all of the following steps.

Step 310: Acquire a signal transmitted by an electrode plate 100 under irradiation by a ray, where the ray is arranged in a transverse direction, namely, a width direction X, of the electrode plate 100 and covers the electrode plate 100, and scans the electrode plate 100 in a longitudinal direction, namely, a length direction Y, of the electrode plate 100.

Step 320: Detect a surface density of a material applied on a surface of the electrode plate 100 based on the signal transmitted by the electrode plate 100.

In this embodiment of the application, the surface density of the electrode plate 100 is detected using a ray. The ray is arranged in the width direction X of the electrode plate 100 and covers the electrode plate 100, and scans the electrode plate 100 along the length direction Y of the electrode plate. In this way, the surface density of the material applied on the surface of the electrode plate 100 is detected based on the signal transmitted by the electrode plate 100. This ray covers the width direction X of the electrode plate 100, and scans the surface of the electrode plate 100, so as to obtain the two-dimensional distribution of surface density in the width direction X of the electrode plate 100. This greatly improves the detection accuracy and sampling rate compared with a single-point detection method.

The emitter 210 emits a ray, which may be, for example, an X-ray beam or a β-ray beam, and the ray undergoes an energy attenuation after passing through the electrode plate 100. For example, the intensity of the ray irradiating the electrode plate 100 and the strength of the signal transmitted by the electrode plate 100 satisfy $I=I_0 e^{-\lambda m}$, where $I_0$ indicates the intensity of the ray irradiating the electrode plate, I indicates the strength of the signal transmitted by the electrode plate 100, λ indicates a mass absorption coefficient of the material, and m indicates a surface density of the electrode plate 100. It can be seen that the logarithm of the strength of the signal transmitted by the electrode plate 100 is inversely proportional to the surface density. It is easy and accurate to detect the surface density of the electrode plate 100 by using a ray.

Specifically, the detector 220 and the emitter 210 are arranged on two opposite sides along a thickness direction Z of the electrode plate 100. Irradiating the surface of the electrode plate 100, the ray scatters, and the direction of the ray after passing through the electrode plate 100 change. M rows × N columns of detector units in the detector 220 need to detect the transmitted signals within their detection ranges. Rays from other regions can be filtered by deploying collimators, so that only the transmitted signals within specific ranges can be detected by corresponding detector units. In other words, the M rows × N columns of detector units have their own detection regions, and each detector unit is used to detect a signal transmitted from a corresponding region on the electrode plate 100.

The detector unit detects a signal transmitted from the corresponding detection region and converts the strength of the signal into a weak electrical signal. By means of multi-channel parallel calculation, the weak electrical signal output by each detector unit can be amplified by an amplifier circuit and converted into a voltage signal with a high signal-to-noise ratio. The voltage signal is converted into a corresponding digital signal through analog-to-digital (A-D) conversion, which is the signal strength I measured after the ray passes through the electrode plate 100.

Such digital signal in the air can be measured when no electrode plate 100 passes between the emitter 210 and the detector 220, and defined as the ray intensity $I_0$ of the material under test. Herein, $I_0$ needs to be defined separately for each detector unit in the detector 220. The absorption coefficient λ of this material is measured using a standard electrode plate of which the surface density m of the surface material is known. According to $I=I_0 e^{-\lambda m}$, the surface density of the current electrode plate 100 under test can be calculated.

Further, the position on the electrode plate 100 corresponding to the measured data is determined based on the moving speed of the electrode plate 100, the two-dimensional distribution of surface density in the width direction X of the electrode plate 100 can be obtained. The following will describe in detail how to obtain the two-dimensional distribution of surface density of the electrode plate 100.

In an embodiment, in step 320, the detecting a surface density of a material applied on a surface of the electrode plate 100 includes: detecting surface densities corresponding to M width positions in the width direction X of the electrode plate 100, where M is a positive integer greater than 1. The two-dimensional distribution of surface density in the width direction X of the electrode plate 100 can be effectively obtained by detecting the surface densities corresponding to M width positions in the width direction X of the electrode plate 100.

For example, the M width positions may correspond to M groups of detector units in the width direction X on a one-to-one basis, and each group of detector units includes N detector units arranged in the length direction Y, where N is a positive integer greater than 1. The surface densities corresponding to the M width positions may each be determined based on the detected data of the M groups of detector units.

In this embodiment of this application, the emitter 210 and the detector 220 are fixed, and the electrode plate 100 moves along its length direction Y and passes between the emitter 210 and the detector 220, so that the electrode plate 100 and the emitter 210 move relative to each other, thereby allowing the ray to scan the electrode plate 100. The foregoing "width positions" are defined by coordinates. As shown in FIG. 2 and FIG. 3, a two-dimensional coordinate system is established based on the length direction Y and the width direction X, and the horizontal coordinate and vertical coordinate of the coordinate system extend along the length direction Y and the width direction X, respectively. The M width positions in the width direction X of the electrode plate 100 may be positions corresponding to the M vertical coordinates in the width direction X. When the electrode plate 100 is moving, the M vertical coordinates of the M width positions remain unchanged.

In an embodiment, in the length direction Y, each of the M width positions corresponds to N length positions, where N is a positive integer greater than 1. The detecting surface densities corresponding to M width positions in the width direction X of the electrode plate 100 includes: obtaining M×N pieces of detected data corresponding to the M width positions and the N length positions; and determining the surface densities corresponding to the M width positions based on the M×N pieces of detected data.

For example, the N length positions may correspond to N groups of detector units in the length direction Y on a one-to-one basis, and each group of detector units includes M detector units arranged in the width direction X. In other words, M×N detector units may be used to collect M×N pieces of detected data. In this application, the two-dimensional distribution of surface density in the width direction X needs to be obtained. Therefore, it is necessary to determine the surface density corresponding to each width position based on the detected data at the N length positions corresponding to each width position.

A plurality of detector units are arranged in the width direction X to detect the surface densities at a plurality of coordinate positions in the width direction X. In addition, a plurality of detector units may also be arranged in the length direction Y to detect the surface densities at a plurality of coordinate positions in the length direction Y Each of the M vertical coordinates corresponds to N horizontal coordinates. During each detection, the detected data at M×N positions corresponding to the M vertical coordinates and N horizontal coordinates can be obtained. Based on the M×N pieces of detected data, the surface densities corresponding to the M width positions can be determined. This further improves the detection accuracy and ensures the reliability of the detection results.

In an embodiment, the obtaining M×N pieces of detected data corresponding to the M width positions and the N length positions includes: each time the electrode plate 100 moves for one detection period T, obtaining the M×N pieces of detected data corresponding to a part of the electrode plate 100 irradiated by the ray in the detection period T.

The electrode plate 100 and the emitter 210 move relative to each other. In this way, the electrode plate 100 can be scanned by the ray. Each time the electrode plate 100 moves for one detection period T, the M×N pieces of detected data corresponding to a region on the electrode plate 100 irradiated by the ray in this detection period T can be obtained, thereby obtaining the two-dimensional distribution of surface density in the width direction X in this region.

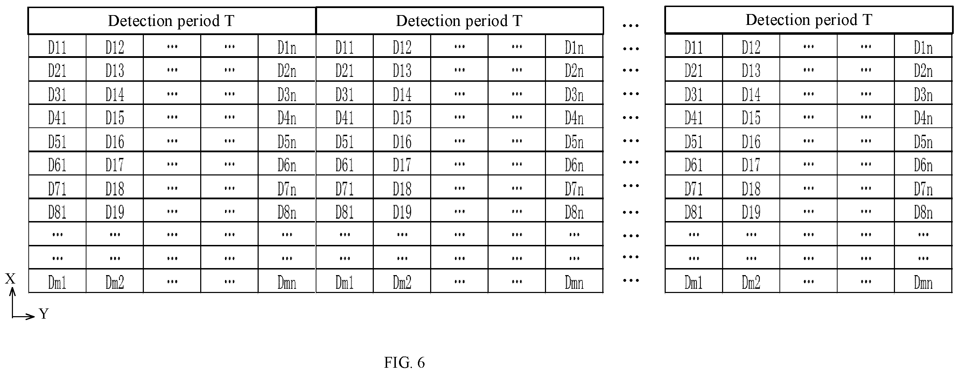

For example, FIG. 6 shows the detection results in multiple detection periods T. In each detection period T, the electrode plate 100 moves for a time T, and the M×N pieces of detected data in each detection period T shown in FIG. 6 are respectively the integral data of M×N detector units in the detector 220 within the time T. The distance the electrode plate 100 moves in each detection period T is S=V1×T, where V1 is the moving speed of the electrode plate 100. The M×N pieces of detected data in each detection period T are intended for the detection region with an area of S×L on the electrode plate 100, where L is the width of the electrode plate 100. In each detection period T, M rows × N columns of detector units perform two-dimensional imaging of the electrode plate 100, where the M rows × N columns of detector units correspond to M×N pixels for two-dimensional imaging. The overlapping area of two detection regions corresponding to two adjacent detection periods T is L×W, where W is a size of the detection region corresponding to the detector 220 in the length direction Y The L×W area on the right side of the detection region corresponding to a previous detection period T overlaps the L×W area on the left side of the detection region corresponding to a next detection period T.

In an embodiment, the determining the surface densities corresponding to the M width positions based on the M×N pieces of detected data includes: determining a surface density corresponding to the i-th width position based on N pieces of detected data corresponding to the i-th width position in the M width positions, where i ranges from 1 to M. Each width position corresponds to N pieces of detected data, and therefore abundant detected data can be provided, helping improve the detection result accuracy on the surface density corresponding to each width position.

For example, the surface density corresponding to the i-th width position can be determined based on an average value of the N pieces of detected data corresponding to the i-th width position. In this way, the surface density corresponding to each width position is obtained by averaging the N pieces of detected data corresponding to each width position, helping improve the detection result accuracy on the surface density corresponding to each width position.

Referring to FIG. 6, $D_{ij}$ represents the detected data of the i-th row and the j-th column among the M×N pieces of detected data in each detection period T, that is, the detected data collected by the detector units at the i-th width position of the M width positions and the j-th length position of the N length positions, i ranges from 1 to M, and j ranges from 1 to N. The integral time of each detector unit is equal to the duration T of a detection period. In each integral time T, the M×N detector units provide a group of detected data, and each group covers an area of S×L on the electrode plate 100. FIG. 6 shows three groups of detected data, and multiple groups of detected data constitute the distribution of surface densities detected by the detector 220. The electrode plate 100 moves at a constant speed along the length direction Y, and there is an overlap in the areas of the electrode plate 100 detected by adjacent detector units in the length direction Y Therefore, the surface density of the electrode plate 100 fluctuates slightly in the length direction Y In normal cases, a great error is present in fluctuation of system noise. As a result, the system error can be reduced by averaging N pieces of detected data, namely, $D_{i1}$ to $D_{in}$, in the length direction Y To be specific, the average value $(D_{i1}+D_{i2}+D_{i3}+...+D_{in})/N$ of detected data $D_{i1}$ to $D_{in}$ is used as the detected data at the i-th width position, so that the surface density $Y_i$ corresponding to the i-th width position can be obtained based on the detected data.

Assuming that a target value of the electrode plate 100 is $Y_0$, $Y_i<Y_0$, and $Y_0-Y_i<Y_0×10\%$, it is determined that the starting position of the coating boundary of the electrode plate 100 is detected in the current detection period T. Herein, 10% is merely an example, and another value may be used, for example, 5%. The upper boundary and lower boundary of the electrode plate 100 can be determined in the same way.

In an embodiment, the method 300 further includes: determining whether the surface density corresponding to the i-th width position is abnormal based on surface densities corresponding to the i-th width position detected in a current detection period T and an adjacent detection period T thereof. Based on the surface densities corresponding to each width position in two adjacent detection periods T, whether the surface density corresponding to the width position is abnormal, for example, there are hidden creases, scratches, bulges, and other coating defects, can also be determined and a prompt is provided, so as to ensure the coating quality.

For example, if a difference between the surface densities corresponding to the i-th width position detected in the current detection period T and the adjacent detection period T thereof is greater than or equal to a product of the surface density corresponding to the i-th width position in the adjacent detection period T and a predetermined value, it is determined that the surface density corresponding to the i-th width position is abnormal, where the predetermined value is between 0 and 1.

For example, the predetermined value is between 1% and 10%. 5% is used as an example. If the difference between the surface density $Y_i$ corresponding to the i-th width position detected in the current detection period T and the surface density $Y_{i-1}$ corresponding to the i-th width position detected in the previous detection period T satisfies $\Delta Y \geq Y_{i-1} \times 5\%$, the i-th width position in the detection region corresponding to the current detection period T is abnormal, meaning that hidden creases, scratches, bulges, and other coating defects may occur.

After the surface densities corresponding to the M width positions are determined, values of the surface densities corresponding to the M width positions may further be calibrated to improve the detection accuracy. In this embodiment of this application, the surface densities corresponding to the M width positions may be calibrated based on the detected data in the width direction X; and/or the surface densities corresponding to the M width positions may be calibrated based on the detected data in the length direction Y.

The moving distance S of the electrode plate 100 in each detection period T is used as the longitudinal size of a two-dimensional imaging pixel of the electrode plate 100, the transverse size of the detector 220 is used as the transverse size of the two-dimensional imaging pixel of the electrode plate 100, and the average value $Y_i$ of N pieces of detected data arranged in the longitudinal direction in each detection period T is an initial value of this pixel. The actual measurement region of each detector unit is larger than its transverse size. In this case, in the width direction X, fluctuation of surface density on the left and right sides of the current pixel affects the detected data at this pixel.

For this reason, in an embodiment, the method 300 further includes calibrating the surface density corresponding to the i-th width position based on the surface density corresponding to the i-th width position, and surface densities corresponding to the (i-1)th width position and/or the (i+1)th width position adjacent to the i-th width position.

In this embodiment, the actual detection region of each detector unit is larger than the size of its signal receiving window. As a result, fluctuation of a surface density corresponding to an adjacent width position of each width position may affect the detection result of the width position. The surface density corresponding to this width position is calibrated in the transverse direction based on the surface density corresponding to its adjacent width position, improving the accuracy of the surface density corresponding to this width position.

For example, the calibrated surface density corresponding to the i-th width position is: $Y_i = f_1(y_{i-1}) + f_2(y_i) + f_3(y_{i+1})$, where $Y_i$ is the calibrated surface density corresponding to the i-th width position, and $y_i$, $y_{i-1}$, and $y_{i+1}$ are uncalibrated surface densities corresponding to the i-th width position, (i-1)th width position, and (i+1)th width position, respectively.

$f_1$, $f_2$, and $f_3$ may be formulae or proportions configured for $y_i$, $y_{i-1}$, and $y_{i+1}$ respectively and are used to determine their weights. For example, $f_1(y_{i-1}) = A1 \times y_{i-1}$, $f_2(y_i) = B1 \times y_i$, and $f_3(y_{i+1}) = C1 \times y_{i+1}$, where A1, B1, and C1 are correction coefficients. For example, these correction coefficients may be functions, matrix data, constants, or the like. Weights are assigned to the i-th width position, (i-1)th width position, and (i+1)th width position based on their degrees of influence to better calibrate the surface density, thereby improving the accuracy of the surface density.

In an embodiment, the method 300 further includes calibrating a surface density corresponding to the i-th width position detected in the current detection period T, based on the surface density corresponding to the i-th width position detected in the current detection period T and a surface density corresponding to the i-th width position detected in a previous detection period T and/or a next detection period T of the current detection period.

There is an overlap between regions of the electrode plate 100 irradiated by a ray in two adjacent detection periods. Therefore, the surface density detected in each detection period T can be calibrated in the longitudinal direction based on the surface density detected in its adjacent detection period T, thereby improving the accuracy of the surface density corresponding to each width position in that detection period T.

In an embodiment, the calibrated surface density corresponding to the i-th width position detected in the current detection period T is: $Y'_j = f_4(y'_{j-1}) + f_5(y'_j) + f_6(y'_{j+1})$, where $Y'_j$ is the calibrated surface density corresponding to the i-th width position detected in the current detection period, and $Y'_j$, $y'_{j-1}$, and $y'_{j+1}$ are uncalibrated surface densities corresponding to the i-th width position detected in the current detection period, the previous detection period, and next detection period, respectively.

$f_4$, $f_5$, and $f_6$ may be formulae or proportions configured for $Y'_j$, $y'_{j-1}$, and $y'_{j+1}$ respectively and are used to determine their weights. For example, $f_4(y_{j-1})=A2\times y'_{j-1}$, $f_5(yj)=B2\times y'_j$, and $f_6(y_{j+1})=C2\times y'_{j+1}$, where A2, B2, and C2 are correction coefficients. For example, these correction coefficients may be functions, matrix data, constants, or the like. Weights are assigned to the current detection period T, the previous detection period T, and the next detection period based on their degrees of influence to better calibrate the surface density, thereby improving the accuracy of the surface density.

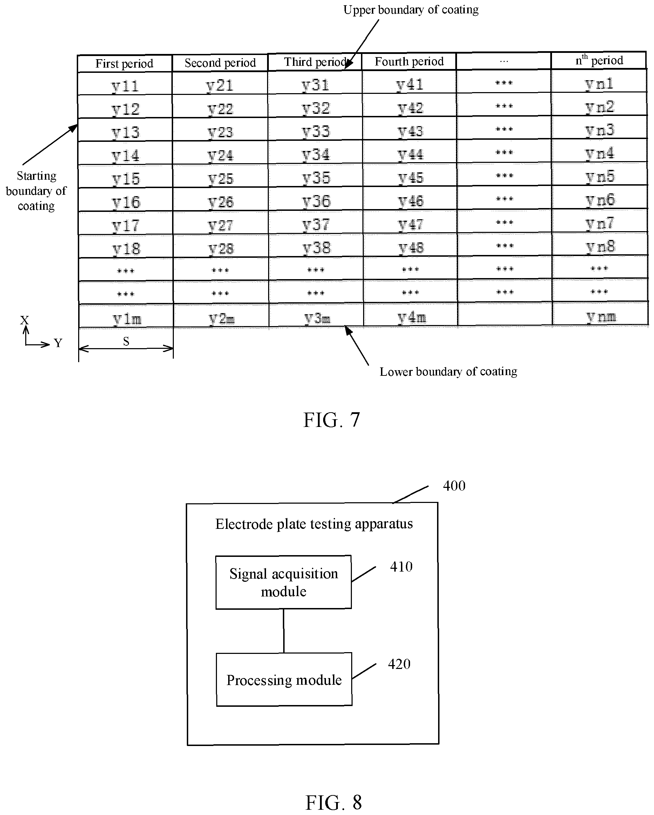

During calibration, transverse calibration may be performed before longitudinal calibration, transverse calibration may be performed following longitudinal calibration, only transverse calibration is performed, or only longitudinal calibration is performed. Herein, an example, in which transverse calibration may be performed before longitudinal calibration, is used to describe in detail how to calibrate the surface density corresponding to the i-th width position in the j-th detection period, with reference to FIG. 7.

As shown in FIG. 7, $y_{ji}$ is the surface density corresponding to the i-th width position in the j-th detection period before transverse calibration, namely the surface density corresponding to the i-th width position determined in the j-th detection period based on the average value $(D_{i1}+D_{i2}+D_{i3}+...+D_{in})/N$ of detected data $D_{i1}$ to $D_{in}$ shown in FIG. 6. i ranges from 1 to M. After the detected data in each detection period T is averaged as mentioned above, M surface densities $y_{j1}$ to $y_{jm}$, corresponding to the M width positions can be obtained.

First, transverse calibration is performed. Regarding the detected data in the j-th detection period, the surface density $y_{ji}$ corresponding to the i-th width position is calibrated based on the uncalibrated surface density $y_{j(i-1)}$ corresponding to the (i-1)th width position and the uncalibrated surface density $y_{j(i+1)}$ corresponding to the (i+1)th width position. Then, the calibrated surface density corresponding to the i-th width position is $Y_i=A1\times y_{j(i-1)}+B1\times y_{ji}+C1\times y_{j(i+1)}$, where A1, B1, and C1 are correction coefficients. Herein, an example is used, in which these correction coefficients are constants between -2 and 2, and A1+B 1+C1=1. Assuming that A1=C1=0.2 and B=0.6,

$$Y_{ji}= y_{j(i-1)}\times20\%+y_{ji}\times60\%+y_{j(i+1)}\times20\%.$$

Next, longitudinal calibration is performed. Based on the surface density $y'_{(j-1)i}$ corresponding to the i-th width position detected in the (j-1)th detection period and the surface density $y'_{(j+1)i}$ corresponding to the i-th width position detected in the (j+1)th detection period, the surface density $y'_{ji}$ corresponding to the i-th width position detected in the j-th detection period is calibrated. The calibrated surface density corresponding to the i-th width position detected in the j-th detection period is $Y'_{ji}=A2\times y'_{(j-1)i}+B2\times y'_{ji}+C2\times y'_{(j+1)i}$. $y'_{(j-1)i}$, $y'_{ji}$, and $y'_{(j+1)i}$ are surface densities $Y_{(j-1)i}$, $Y_{ji}$, and $Y_{(j+1)i}$ corresponding to the i-th width position detected in the (j-1)th detection period, j-th detection period, and (j+1)th detection period respectively after the foregoing transverse calibration. Then, the surface density corresponding to the i-th width position after longitudinal calibration is $Y'_{ji}=A2\times Y_{(j-1)}+B2\times Y_{ji}+C2\times Y_{(j+1)i}$, where A2, B2, and C2 are correction coefficients. Herein, an example is used, in which these correction coefficients are constants between -2 and 2, and A2+B2+C2=1. Assuming that A2=C2=0.1 and B=0.8, $Y'_{ji}=Y_{(j-1)i}\times10\%+Y_{ji}\times80\%+Y_{(j+1)i}\times10\%$.

In the electrode plate testing method 300 according to some embodiments of this application, the starting boundary of coating is determined first, each group of measured data and positions of the electrode plate 100 are determined based on the measurement time and coating speed V1, detector units corresponding to the upper and lower boundaries of the coating region are determined, a transverse position of the coating region is determined based on a mapping between detector units and positions of the electrode plate 100 (the electrode plate 100 and the detector 220 are aligned to the center in the width direction X), and finally the two-dimensional distribution of surface densities of the electrode plate 100 can be imaged.

In an embodiment, the method 300 further includes: adjusting an amount of the material applied on the electrode plate 100 in M coating directions, based on the surface densities corresponding to the M width positions, where the M coating directions correspond to the M width positions respectively, and the coating directions are parallel to the length direction Y

In this embodiment, feeding amounts in the M coating directions corresponding to the M width positions are adjusted based on the surface densities corresponding to the M width positions for a closed-loop adjustment of the surface density of the electrode plate 100, greatly improving the coating effects of the electrode plate 100.

Specifically, as shown in FIG. 4, an adjusting mechanism 250 includes M coating die heads 240 corresponding to the M width positions, each coating die head 240 is connected to one adjusting mechanism 250, and each adjusting mechanism 250 includes an adjusting block 251 and a driver block 252. The driver block 252 controls the width of a slit 241 of a corresponding coating die head 240 based on the surface density corresponding to the i-th width position. For example, if the surface density is high, the driver block 252 drives the adjusting block 251 to move down to narrow the slit 241, so as to reduce the feeding amount of the corresponding coating die head 240; if the surface density is low, the driver block 252 drives the adjusting block 251 to move up to widen the slit 241, so as to increase the feeding amount of the corresponding coating die head 240 The distance of each adjustment may be, for example, between 0 to 200 $\mu$m.

For example, a target range may be set. If the detected surface density corresponding to the i-th width position is within the target range, the feeding amount is not adjusted in the coating direction corresponding to the i-th width position; if the detected surface density corresponding to the i-th width position is beyond the target range, the feeding amount is adjusted in the coating direction corresponding to the i-th width position. For example, the height of the corresponding adjusting block may be adjusted based on a deviation of the surface density corresponding to the i-th width position from the target range, so as to change the amount of slurry fed through the slit 241 of the coating die head 240.

An embodiment of this application further provides an electrode plate testing apparatus 400. As shown in FIG. 8, the electrode plate testing apparatus 400 includes a signal acquisition module 410 and a processing module 420.

The signal acquisition module 410 is configured to acquire a signal transmitted by the electrode plate 100 under irradiation by a ray, where the ray is arranged in a width direction X of the electrode plate 100 and covers the electrode plate 100, and scans the electrode plate 100 along a length direction Y of the electrode plate 100. The processing module 420 is configured to detect a surface density of a material applied on a surface of the electrode plate 100 based on the signal transmitted by the electrode plate 100.

In an embodiment, the processing module 420 is specifically configured to detect surface densities corresponding to M width positions in the width direction X of the electrode plate 100, where M is a positive integer greater than 1.

In an embodiment, in the length direction Y, each of the M width positions corresponds to N length positions, the signal acquisition module 410 is further configured to obtain $M \times N$ pieces of detected data corresponding to the M width positions and the N length positions; and the processing module 420 is specifically configured to determine the surface densities corresponding to the M width positions based on the $M \times N$ pieces of detected data.

In an embodiment, the electrode plate 100 moves along the length direction Y, and the signal acquisition module 410 is specifically configured to: each time the electrode plate 100 moves for one detection period, obtain the $M \times N$ pieces of detected data corresponding to a part of the electrode plate 100 irradiated by the ray in the detection period.

In an embodiment, the processing module 420 is specifically configured to determine a surface density corresponding to the i-th width position based on N pieces of detected data corresponding to the i-th width position in the M width positions, where i ranges from 1 to M.

In an embodiment, the processing module 420 is specifically configured to determine the surface density corresponding to the i-th width position based on an average value of the N pieces of detected data corresponding to the i-th width position.

In an embodiment, the processing module 420 is further configured to calibrate the surface density corresponding to the i-th width position based on the surface density corresponding to the i-th width position, and surface densities corresponding to the (i-1)th width position and/or the (i+1)th width position adjacent to the i-th width position.

In an embodiment, the calibrated surface density corresponding to the i-th width position is: $Y_i = f_1(y_{i-1}) + f_2(y_i) + f_3(y_{i+1})$, where $Y_i$ is the calibrated surface density corresponding to the i-th width position, and $y_i$, $y_{i-1}$, and $y_{i+1}$ are uncalibrated surface densities corresponding to the i-th width position, (i-1)th width position, and (i+1)th width position, respectively.

In an embodiment, $f_1(y_{i-1}) = A1 \times y_{i-1}$, $f_2(y_i) = B1 \times y_i$, and $f_3(y_{i+1}) = C1 \times y_{i+1}$, where A1, B1, and C1 are correction coefficients.

In an embodiment, the processing module 420 is further configured to calibrate a surface density corresponding to the i-th width position detected in the j-th detection period, based on the surface density corresponding to the i-th width position detected in the j-th detection period and a surface density corresponding to the i-th width position detected in the (j-1)th detection period and/or the (j+1)th detection period.

In an embodiment, the calibrated surface density corresponding to the i-th width position detected in the j-th detection period is: $Y'_j = f_4(y'_{j-1}) + f_5(y'_j) + f_6(y'_{j+1})$, where $Y'_j$ is the calibrated surface density corresponding to the i-th width position detected in the j-th detection period, and $Y'_j$, $y'_{j-1}$, and $y'_{j+1}$ are uncalibrated surface densities corresponding to the i-th width position detected in the j-th detection period, (j-1)th detection period, and (j+1)th detection period, respectively.

In an embodiment, $f_4(y_{j-1}) = A2 \times y'_{j-1}$, $f_5(y_j) = B2 \times y'_j$, and $f_6(y'_{j+1}) = C2 \times y'_{j+1}$, where A2, B2, and C2 are correction coefficients.

In an embodiment, the processing module 420 is further configured to determine whether the surface density corresponding to the i-th width position is abnormal based on the surface density corresponding to the i-th width position and a standard value of surface density of the electrode plate 100.

In an embodiment, the processing module 420 is specifically configured to: if a difference between the surface density corresponding to the i-th width position and the standard value is greater than a predetermined value, determine that the surface density corresponding to the i-th width position is abnormal.

In an embodiment, the predetermined value is between 1% and 10%.

In an embodiment, the processing module 420 is further configured to adjust an amount of the material applied on the electrode plate 100 in M coating directions, based on the surface densities corresponding to the M width positions, where the M coating directions correspond to the M width positions respectively, and the coating directions are parallel to the length direction Y

In an embodiment, intensity of the ray irradiating the electrode plate 100 and strength of the signal transmitted by the electrode plate 100 satisfy $I=I_0e^{-\lambda m}$, where $I_0$ indicates the intensity of the ray irradiating the electrode plate 100, I indicates the strength of the signal transmitted by the electrode plate 100, $\lambda$ indicates a mass absorption coefficient of the material, and m indicates a surface density of the electrode plate 100.

In an embodiment, the ray is an X-ray or a $\beta$-ray.

This application further provides an electrode plate 100 testing apparatus, including a memory and a processor, where the memory has computer instructions stored thereon, and the processor uses the computer instructions to instruct the apparatus to implement the method for testing the electrode plate 100 according to any one of the foregoing embodiments.

This application further provides a computer-readable storage medium, configured to store a computer program, where when the computer program is executed by a computing device, the electrode plate 100 testing method according to any one of the foregoing embodiments is implemented by the computing device.

It should be noted that in the absence of conflict, various embodiments and/or technical features in each embodiment described in this application can be combined arbitrarily, and the technical solution obtained through the combination should also fall within the protection scope of this application.

A person of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus and method may be implemented in other manners. The apparatus embodiment described above is merely an example. For example, such unit division is merely a logical function division, and another division manner may be used during actual implementation. For another example, a plurality of units or components may be combined, or may be integrated into another system, or some features may be ignored or not performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separate. A component displayed as a unit may be one or more physical units, and may be located in one place, or may be distributed in a plurality of places. Some or all of the units may be selected based on an actual requirement, to achieve the objectives of the solutions in the embodiments.

**Claims**

1. An electrode plate testing method, **characterized in that** the method comprises:

   acquiring a signal transmitted by an electrode plate under irradiation by a ray, wherein the ray is arranged in a width direction of the electrode plate and covers the electrode plate, and scans the electrode plate along a length direction of the electrode plate; and
   detecting a surface density of a material applied on a surface of the electrode plate based on the signal transmitted by the electrode plate.

2. The method according to claim 1, **characterized in that** the detecting a surface density of a material applied on a surface of the electrode plate comprises:
   detecting surface densities corresponding to M width positions in the width direction of the electrode plate, wherein M is a positive integer greater than 1.

3. The method according to claim 2, **characterized in that** in the length direction, each of the M width positions corresponds to N length positions, wherein N is a positive integer greater than 1, and the detecting surface densities corresponding to M width positions in the width direction of the electrode plate comprises:

   obtaining $M \times N$ pieces of detected data corresponding to the M width positions and the N length positions; and
   determining the surface densities corresponding to the M width positions based on the $M \times N$ pieces of detected data.

4. The method according to claim 3, **characterized in that** the electrode plate moves along the length direction, and the obtaining $M \times N$ pieces of detected data corresponding to the M width positions and the N length positions comprises:
   each time the electrode plate moves for one detection period, obtaining the M×N pieces of detected data corresponding to a part of the electrode plate irradiated by the ray in the detection period.

5. The method according to claim 3 or 4, **characterized in that** the determining the surface densities corresponding to the M width positions based on the M×N pieces of detected data comprises:
determining a surface density corresponding to the i-th width position based on N pieces of detected data corresponding to the i-th width position in the M width positions, wherein i ranges from 1 to M.

6. The method according to claim 5, **characterized in that** the determining a surface density corresponding to the i-th width position based on N pieces of detected data corresponding to the i-th width position in the M width positions comprises:
determining the surface density corresponding to the i-th width position based on an average value of the N pieces of detected data corresponding to the i-th width position.

7. The method according to claim 5 or 6, **characterized in that** the method further comprises:
calibrating the surface density corresponding to the i-th width position based on the surface density corresponding to the i-th width position and surface densities corresponding to the (i-1)th width position and/or the (i+1)th width position adjacent to the i-th width position.

8. The method according to claim 7, **characterized in that** the calibrated surface density corresponding to the i-th width position is:
$Y_i=f_1(y_{i-1})+f_2(y_i)+f_3(y_{i+1})$, wherein $Y_i$ is the calibrated surface density corresponding to the i-th width position, and $y_i$, $y_{i-1}$, and $y_{i+1}$ are uncalibrated surface densities corresponding to the i-th width position, (i-1)th width position, and (i+1)th width position, respectively.

9. The method according to claim 8, **characterized in that** $f_1(y_{i-1})=A1 \times y_{i-1}$, $f_2(y_i)=B1 \times y_i$, and $f_3(y_{i+1})=C1 \times y_{i+1}$, wherein A1, B1, and C1 are correction coefficients.

10. The method according to any one of claims 5 to 9, **characterized in that** the method further comprises:
calibrating a surface density corresponding to the i-th width position detected in the j-th detection period, based on the surface density corresponding to the i-th width position detected in the j-th detection period and a surface density corresponding to the i-th width position detected in the (j-1)th detection period and/or the (j+1)th detection period.

11. The method according to claim 8, **characterized in that** the calibrated surface density corresponding to the i-th width position detected in the j-th detection period is:
$Y'_j=f_4(y'_{j-1})+f_5(y'_j)+f_6(y'_{j+1})$, wherein $Y'_j$ is the calibrated surface density corresponding to the i-th width position detected in the j-th detection period, and $Y'_j$, $y'_{j-1}$, and $y'_{j+1}$ are uncalibrated surface densities corresponding to the i-th width position detected in the j-th detection period, (j-1)th detection period, and (j+1)th detection period, respectively.

12. The method according to claim 11, **characterized in that** $f_4(y_{j-1})=A2 \times y'_{j-1}$, $f_5(y_j)=B2 \times y'_j$, and $f_6(y'_{j+1})=C2 \times y'_{j+1}$, wherein A2, B2, and C2 are correction coefficients.

13. The method according to any one of claims 5 to 12, **characterized in that** the method further comprises:
determining whether the surface density corresponding to the i-th width position is abnormal based on surface densities corresponding to the i-th width position detected in a current detection period and an adjacent detection period thereof.

14. The method according to claim 13, **characterized in that** the determining whether the surface density corresponding to the i-th width position is abnormal based on surface densities corresponding to the i-th width position detected in a current detection period and an adjacent detection period thereof comprises:
if a difference between the surface densities corresponding to the i-th width position detected in the current detection period and the adjacent detection period thereof is greater than or equal to a product of the surface density corresponding to the i-th width position in the adjacent detection period and a predetermined value, determining that the surface density corresponding to the i-th width position is abnormal, wherein the predetermined value is between 0 and 1.

15. The method according to claim 14, **characterized in that** the predetermined value is between 1% and 10%.

16. The method according to any one of claims 5 to 15, **characterized in that** the method further comprises:
adjusting an amount of the material applied on the electrode plate in M coating directions, based on the surface densities corresponding to the M width positions, wherein the M coating directions correspond to the M width positions respectively, and the coating directions are parallel to the length direction.

17. The method according to any one of claims 1 to 16, **characterized in that** intensity of the ray irradiating the electrode plate and strength of the signal transmitted by the electrode plate satisfy $I=I_0 e^{-\lambda m}$, wherein

$I_0$ indicates the intensity of the ray irradiating the electrode plate, I indicates the strength of the signal transmitted by the electrode plate, $\lambda$ indicates a mass absorption coefficient of the material, and m indicates a surface density of the electrode plate.

18. The method according to any one of claims 1 to 17, **characterized in that** the ray is an X-ray or a $\beta$-ray.

19. An electrode plate testing apparatus, **characterized by** comprising:

    a signal acquisition module, configured to acquire a signal transmitted by an electrode plate under irradiation by a ray, wherein the ray is arranged in a width direction of the electrode plate and covers the electrode plate, and scans the electrode plate along a length direction of the electrode plate; and
    a processing module, configured to detect a surface density of a material applied on a surface of the electrode plate based on the signal transmitted by the electrode plate.

20. The apparatus according to claim 19, **characterized in that** the processing module is specifically configured to:
    detect surface densities corresponding to M width positions in the width direction of the electrode plate, wherein M is a positive integer greater than 1.

21. The apparatus according to claim 20, **characterized in that** in the length direction, each of the M width positions corresponds to N length positions, wherein

    the signal acquisition module is further configured to obtain M×N pieces of detected data corresponding to the M width positions and the N length positions; and
    the processing module is specifically configured to determine the surface densities corresponding to the M width positions based on the M×N pieces of detected data.

22. The apparatus according to claim 21, **characterized in that** the electrode plate moves along the length direction, and the signal acquisition module is specifically configured to:
    each time the electrode plate moves for one detection period, obtain the M×N pieces of detected data corresponding to a part of the electrode plate irradiated by the ray in the detection period.

23. The apparatus according to claim 21 or 22, **characterized in that** the processing module is specifically configured to:
    determining a surface density corresponding to the i-th width position based on N pieces of detected data corresponding to the i-th width position in the M width positions, wherein i ranges from 1 to M.

24. The apparatus according to claim 23, **characterized in that** the processing module is specifically configured to:
    determine the surface density corresponding to the i-th width position based on an average value of the N pieces of detected data corresponding to the i-th width position.

25. The apparatus according to claim 23 or 24, **characterized in that** the processing module is further configured to:
    calibrate the surface density corresponding to the i-th width position based on the surface density corresponding to the i-th width position and surface densities corresponding to the (i-1)th width position and/or the (i+1)th width position adjacent to the i-th width position.

26. The apparatus according to claim 25, **characterized in that** the calibrated surface density corresponding to the i-th width position is:
    $Y_i=f_1(y_{i-1})+f_2(y_i)+f_3(y_{i+1})$, wherein $Y_i$ is the calibrated surface density corresponding to the i-th width position, and $y_i$, $y_{i-1}$, and $y_{i+1}$ are uncalibrated surface densities corresponding to the i-th width position, (i-1)th width position, and (i+1)th width position, respectively.

27. The apparatus according to claim 26, **characterized in that** $f_1(y_{i-1})=A1×y_{i-1}$, $f_2(y_i)=B1×y_i$, and $f_3(y_{i+1})=C1×y_{i+1}$, wherein A1, B1, and C1 are correction coefficients.

28. The apparatus according to any one of claims 23 to 27, **characterized in that** the processing module is further configured to:
    calibrating a surface density corresponding to the i-th width position detected in the j-th detection period, based on the surface density corresponding to the i-th width position detected in the j-th detection period and a surface density corresponding to the i-th width position detected in the (j-1)th detection period and/or the (j+1)th detection period.

29. The apparatus according to claim 28, **characterized in that** the calibrated surface density corresponding to the i-th width position detected in the j-th detection period is:
    $Y'_j=f_4(y'_{j-1})+f_5(y'_j)+f_6(y'_{j+1})$, wherein $Y'_j$ is the calibrated surface density corresponding to the i-th width position detected in the j-th detection period, and $Y'_j$, $y'_{j-1}$, and $y'_{j+1}$ are uncalibrated surface densities corresponding to the i-th width position detected in the j-th detection period, (j-1)th detection period, and (j+1)th detection period, respectively.

**30.** The apparatus according to claim 29, **characterized in that** $f_4(y_{j-1})=A2 \times y'_{j-1}$, $f_5(y_j)=B2 \times y'_j$, and $f_6(y'_{j+1})=C2 \times y'_{j+1}$, wherein A2, B2, and C2 are correction coefficients.

**31.** The apparatus according to any one of claims 23 to 30, **characterized in that** the processing module is further configured to:
determining whether the surface density corresponding to the i-th width position is abnormal based on surface densities corresponding to the i-th width position detected in a current detection period and an adjacent detection period thereof.

**32.** The apparatus according to claim 31, **characterized in that** the processing module is specifically configured to:
if a difference between the surface densities corresponding to the i-th width position detected in the current detection period and the adjacent detection period thereof is greater than or equal to a product of the surface density corresponding to the i-th width position in the adjacent detection period and a predetermined value, determine that the surface density corresponding to the i-th width position is abnormal, wherein the predetermined value is between 0 and 1.

**33.** The apparatus according to claim 32, **characterized in that** the predetermined value is between 1% and 10%.

**34.** The apparatus according to any one of claims 23 to 33, **characterized in that** the processing module is further configured to:
adjusting an amount of the material applied on the electrode plate in M coating directions, based on the surface densities corresponding to the M width positions, wherein the M coating directions correspond to the M width positions respectively, and the coating directions are parallel to the length direction.

**35.** The apparatus according to any one of claims 19 to 34, **characterized in that** intensity of the ray irradiating the electrode plate and strength of the signal transmitted by the electrode plate satisfy $I=I_0 e^{-\lambda m}$, wherein $I_0$ indicates the intensity of the ray irradiating the electrode plate, I indicates the strength of the signal transmitted by the electrode plate, $\lambda$ indicates a mass absorption coefficient of the material, and m indicates a surface density of the electrode plate.

**36.** The apparatus according to any one of claims 19 to 35, **characterized in that** the ray is an X-ray or a $\beta$-ray.

**37.** An electrode plate testing apparatus, **characterized by** comprising a memory and a processor, wherein the memory has computer instructions stored thereon, and the processor uses the computer instructions to instruct the apparatus to implement the electrode plate testing method according to any one of claims 1 to 18.

**38.** A computer-readable storage medium, **characterized by** being configured to store a computer program, wherein when the computer program is executed by a computing device, the electrode plate testing method according to any one of claims 1 to 18 is implemented by the computing device.

FIG. 1

FIG. 2

FIG. 3

FIG. 4

300

| |
|---|
| Acquire a signal transmitted by an electrode plate under irradiation by a ray, where the ray is arranged in a traverse direction, namely, a width direction, of the electrode plate and covers the electrode plate, and scans the electrode plate in a longitudinal direction, namely, a length direction, of the electrode plate |

310

| |
|---|
| Detect a surface density of a material applied on a surface of the electrode plate based on the signal transmitted by the electrode plate |

320

FIG. 5

| Detection period T | | | | | Detection period T | | | | | ... | Detection period T | | | | |
|---|---|---|---|---|---|---|---|---|---|---|---|---|---|---|---|---|
| D11 | D12 | ... | ... | D1n | D11 | D12 | ... | ... | D1n | ... | D11 | D12 | ... | ... | D1n |
| D21 | D13 | ... | ... | D2n | D21 | D13 | ... | ... | D2n | ... | D21 | D13 | ... | ... | D2n |
| D31 | D14 | ... | ... | D3n | D31 | D14 | ... | ... | D3n | ... | D31 | D14 | ... | ... | D3n |
| D41 | D15 | ... | ... | D4n | D41 | D15 | ... | ... | D4n | ... | D41 | D15 | ... | ... | D4n |
| D51 | D16 | ... | ... | D5n | D51 | D16 | ... | ... | D5n | ... | D51 | D16 | ... | ... | D5n |
| D61 | D17 | ... | ... | D6n | D61 | D17 | ... | ... | D6n | ... | D61 | D17 | ... | ... | D6n |
| D71 | D18 | ... | ... | D7n | D71 | D18 | ... | ... | D7n | ... | D71 | D18 | ... | ... | D7n |
| D81 | D19 | ... | ... | D8n | D81 | D19 | ... | ... | D8n | ... | D81 | D19 | ... | ... | D8n |
| ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... |
| Dm1 | Dm2 | ... | ... | Dmn | Dm1 | Dm2 | ... | ... | Dmn | ... | Dm1 | Dm2 | ... | ... | Dmn |

X, Y

FIG. 6

Upper boundary of coating

| First period | Second period | Third period | Fourth period | ... | $n^{th}$ period |
|---|---|---|---|---|---|
| y11 | y21 | y31 | y41 | ••• | yn1 |
| y12 | y22 | y32 | y42 | ••• | yn2 |
| y13 | y23 | y33 | y43 | ••• | yn3 |
| y14 | y24 | y34 | y44 | ••• | yn4 |
| y15 | y25 | y35 | y45 | ••• | yn5 |
| y16 | y26 | y36 | y46 | ••• | yn6 |
| y17 | y27 | y37 | y47 | ••• | yn7 |
| y18 | y28 | y38 | y48 | ••• | yn8 |
| ••• | ••• | ••• | ••• | ••• | ••• |
| ••• | ••• | ••• | ••• | ••• | ••• |
| y1m | y2m | y3m | y4m | | ynm |

Starting boundary of coating

X
Y
S

Lower boundary of coating

FIG. 7

400

Electrode plate testing apparatus

Signal acquisition module — 410

Processing module — 420

FIG. 8

## INTERNATIONAL SEARCH REPORT

| | International application No. |
|---|---|
| | **PCT/CN2022/115851** |

**A.    CLASSIFICATION OF SUBJECT MATTER**

G01N23/06(2018.01)i;G01N23/223(2006.01)i;G01N9/02(2006.01)i

According to International Patent Classification (IPC) or to both national classification and IPC

**B.    FIELDS SEARCHED**

Minimum documentation searched (classification system followed by classification symbols)

IPC:G01N

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 极片, X射线, β射线, 扫描, 面密度, 厚度, electrode plate, X ray, β ray, scan, area density, thickness

**C.    DOCUMENTS CONSIDERED TO BE RELEVANT**

| Category* | Citation of document, with indication, where appropriate, of the relevant passages | Relevant to claim No. |
|---|---|---|
| Y | JP 2006090892 A (FUTEC INC.) 06 April 2006 (2006-04-06)<br>description, paragraphs 4-60, and figures 1-4 | 1-38 |
| Y | CN 109225766 A (SHENZHEN HAONENG TECHNOLOGY CO., LTD.) 18 January 2019 (2019-01-18)<br>description, paragraphs 3-69, and figures 1-2 | 1-38 |
| Y | CN 1991345 A (BYD CO., LTD.) 04 July 2007 (2007-07-04)<br>description, p. 1, line 16-p. 13, the last line, and figures 1-8 | 1-38 |
| Y | CN 110018081 A (NANJING GUOXUAN BATTERY CO., LTD.) 16 July 2019 (2019-07-16)<br>description, paragraphs 4-37, and figures 1-4 | 1-38 |
| Y | CN 112304989 A (GUANGDONG TAIJI POWER TECHNOLOGY CO., LTD.) 02 February 2021 (2021-02-02)<br>description, paragraphs 4-56, and figures 1-2 | 1-38 |
| A | CN 105783746 A (NANJING FORESTRY UNIVERSITY) 20 July 2016 (2016-07-20)<br>entire document | 1-38 |

☑ Further documents are listed in the continuation of Box C.    ☑ See patent family annex.

| * | Special categories of cited documents: | |
|---|---|---|
| "A" | document defining the general state of the art which is not considered to be of particular relevance | "T"  later document published after the international filing date or priority date and not in conflict with the application but cited to understand the principle or theory underlying the invention |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **27 April 2023** | **12 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2022/115851** |

**C. DOCUMENTS CONSIDERED TO BE RELEVANT**

| Category* | Citation of document, with indication, where appropriate, of the relevant passages | Relevant to claim No. |
|---|---|---|
| A | JP 2000338023 A (SONY CORP.) 08 December 2000 (2000-12-08)<br>entire document | 1-38 |

Form PCT/ISA/210 (second sheet) (July 2022)

**INTERNATIONAL SEARCH REPORT**
Information on patent family members

International application No.

**PCT/CN2022/115851**

| Patent document cited in search report | | | Publication date (day/month/year) | Patent family member(s) | | | Publication date (day/month/year) |
|---|---|---|---|---|---|---|---|
| JP | 2006090892 | A | 06 April 2006 | None | | | |
| CN | 109225766 | A | 18 January 2019 | CN | 109225766 | B | 28 July 2020 |
| CN | 1991345 | A | 04 July 2007 | CN | 100588960 | C | 10 February 2010 |
| CN | 110018081 | A | 16 July 2019 | None | | | |
| CN | 112304989 | A | 02 February 2021 | CN | 112304989 | B | 24 February 2023 |
| CN | 105783746 | A | 20 July 2016 | None | | | |
| JP | 2000338023 | A | 08 December 2000 | None | | | |

Form PCT/ISA/210 (patent family annex) (July 2022)